# EUROPEAN PATENT APPLICATION

(11) **EP 4 344 035 A1**
(43) Date of publication of application: **27.03.2024**
(21) Application number: 22196463.8
(22) Date of filing: 20.09.2022
(51) Int. Cl.: H02M 1/00, H02M 3/00, H02M 3/335

(54) **RESONANT HYBRID FLYBACK CONVERTER WITH OVERCURRENT DETECTION**

(71) Applicant: Tridonic GmbH & Co. KG, 6851 Dornbirn (AT)
(72) Inventor: Schneider, Miguel Philipp, 6850 Dornbirn (AT); Maldoner, Jakob, 6850 Dornbirn (AT)
(74) Representative: Rupp, Christian

(57) **Abstract**

A resonant hybrid flyback converter (100) with overcurrent detection and/or protection for LED lighting means (34) is provided. Said resonant hybrid flyback converter (100) comprises a half-bridge (10), and a flyback resonant tank (20) comprising a transformer with a primary side (61) and a secondary side (62). In this context, the half-bridge (10) is configured to supply said primary side (61). In addition to this, the resonant hybrid flyback converter (100) comprises a control unit (70) controlling the operation of switches (11, 12) of the half-bridge (10) and being supplied with a feedback signal (sensing) from a sensing circuit (Rₛₕᵤₙₜ) configured to sense a primary-side current in the flyback resonant tank (20).

## Description

The invention relates to a resonant hybrid flyback converter with overcurrent detection and/or protection.

"Hybrid flyback" is to be understood "half-bridge circuit supplying a flyback resonant tank".

Generally, in times of an increasing use of LED (light-emitting diode) lighting means in many different areas of life, there is a growing need of a resonant hybrid flyback converter with overcurrent detection and/or protection for LED lighting means, and a system comprising such a resonant hybrid flyback converter with overcurrent detection and/or protection and LED lighting means in order to ensure an efficient and reliable supply of said LED lighting means.

However, there are no resonant hybrid flyback converters allowing for protecting both the LED lighting means and the corresponding pre-circuitry as a whole from possible damage especially due to an overcurrent.

Accordingly, there is the object to provide a resonant hybrid flyback converter with overcurrent detection and/or protection for LED lighting means, and a system comprising such a resonant hybrid flyback converter with overcurrent detection and/or protection and LED lighting means, thereby ensuring a high efficiency and reliability.

This object is solved by the features of claim 1 for a resonant hybrid flyback converter with overcurrent detection and/or protection for LED lighting means and the features of claim 15 for a system comprising such a resonant hybrid flyback converter with overcurrent detection and/or protection and LED lighting means. The dependent claims contain further developments.

According to a first aspect of the invention, a resonant hybrid flyback converter (for LED lighting means) with overcurrent detection and/or protection is provided. Said resonant hybrid flyback converter comprises a half-bridge, and a flyback resonant tank comprising a transformer with a primary side and a secondary side. In this context, the half-bridge is configured to supply said primary side. In addition to this, the resonant hybrid flyback converter comprises a control unit controlling the operation of switches of the half-bridge and being supplied with a feedback signal from a sensing circuit configured to sense a primary-side current in the flyback resonant tank. Advantageously, the half-bridge, the overall circuit and the load or the LED lighting means, respectively, are protected from possible damage in the case of an overcurrent event in a particularly efficient and reliable manner.

According to a first preferred implementation form of the first aspect of the invention, the switches of the half-bridge comprise a high-side switch, preferably a first transistor, more preferably a first field-effect transistor, and a low-side switch, preferably a second transistor, more preferably a second field-effect transistor. Advantageously, for instance, complexity can be reduced, thereby increasing efficiency. Further advantageously, the inventive current sensing captures both the corresponding magnetizing current especially through the high-side switch and the corresponding resonant current especially through the low-side switch.

According to a second preferred implementation form of the first aspect of the invention, the primary side comprises a series connection of an optional inductance, preferably an optional leakage inductance, more preferably an optional resonance choke, most preferably a resonance choke implemented in the transformer or as a separate component, a corresponding transformer main inductance and a capacitance, preferably a resonance capacitor. In this context, the corresponding primary-side current especially flows through said series connection. Advantageously, for example, simplicity can be ensured, which leads to a high efficiency.

According to a further preferred implementation form of the first aspect of the invention, especially in the context of sensing the corresponding primary-side current, the flyback resonant tank, especially the primary side, comprises a resistance, preferably a shunt resistor, more preferably a shunt resistor providing a sensing voltage, most preferably a shunt resistor providing a sensing voltage in accordance with the corresponding primary-side current. Advantageously, for instance, current sensing can be implemented in an easy, and thus cost-efficient, manner.

According to a further preferred implementation form of the first aspect of the invention, the series connection further comprises the resistance, preferably the shunt resistor, more preferably the shunt resistor providing the sensing voltage, most preferably the shunt resistor providing the sensing voltage in accordance with the corresponding primary-side current. Advantageously, for example, complexity can further be reduced, which leads to an increased efficiency.

According to a further preferred implementation form of the first aspect of the invention, a first terminal of the resistance, preferably the shunt resistor, more preferably the shunt resistor providing the sensing voltage, most preferably the shunt resistor providing the sensing voltage in accordance with the corresponding primary-side current, is connected to a terminal of the capacitance, preferably the resonance capacitor. In addition to this or as an alternative, a second terminal of the resistance, preferably the shunt resistor, more preferably the shunt resistor providing the sensing voltage, most preferably the shunt resistor providing the sensing voltage in accordance with the corresponding primary-side current, is connected to a voltage potential, preferably ground. Advantageously, for instance, simplicity can further be increased, thereby decreasing inefficiencies.

According to a further preferred implementation form of the first aspect of the invention, a first terminal of the resistance, preferably the shunt resistor, more preferably the shunt resistor providing the sensing voltage, most preferably the shunt resistor providing the sensing voltage in accordance with the corresponding primary-side current, is connected to a sensing terminal. Advantageously, for example, the sensing voltage can be provided for further processing in an easy manner, thereby increasing efficiency.

According to a further preferred implementation form of the first aspect of the invention, the resonant hybrid flyback converter is further configured to compare the sensed corresponding primary-side current to a reference preferably with the aid of a comparator especially comprised by the resonant hybrid flyback converter. Advantageously, for instance, said reference may preferably define the maximum allowed current in an efficient and reliable manner. It is noted that for the case that said reference is exceeded by the sensed signal, an overcurrent event occurred.

According to a further preferred implementation form of the first aspect of the invention, on the basis of the comparison between the sensed corresponding primary-side current and the reference, preferably in the case that the sensed corresponding primary-side current exceeds the reference, the resonant hybrid flyback converter is further configured to trigger the entering of a constant off-time mode, especially deactivation, of the half-bridge, preferably of the high-side switch and/or the low-side switch, more preferably of the high-side switch and/or the low-side switch depending on the corresponding timing of the respective overcurrent event. Advantageously, for example, the half-bridge can fully be switched off in an efficient manner, which allows for a particularly reliable overcurrent protection.

According to a further preferred implementation form of the first aspect of the invention, on the basis of the comparison between the sensed corresponding primary-side current and the reference, preferably in the case that the sensed corresponding primary-side current exceeds the reference, the resonant hybrid flyback converter is further configured to trigger the entering of a constant on-time mode of the half-bridge, preferably of the high-side switch and/or the low-side switch. Advantageously, for instance, the high-side switch and the low-side switch can individually be switched in an efficient manner.

According to a further preferred implementation form of the first aspect of the invention, on the basis of the comparison between the sensed corresponding primary-side current and the reference, preferably in the case that the sensed corresponding primary-side current exceeds the reference, the resonant hybrid flyback converter is further configured to trigger the entering of a burst mode with respect to the half-bridge, preferably a burst mode reducing the corresponding frequency of the respective drive signal of the high-side switch and/or the low-side switch. Advantageously, for example, such a burst mode allows for a particularly efficient and reliable overcurrent protection.

According to a further preferred implementation form of the first aspect of the invention, the resonant hybrid flyback converter is further configured to trigger the entering of an operational mode preferably after a defined time and/or responsive to a trigger signal. Advantageously, for instance, said operational mode can preferably be a regular operation mode or an operational mode according to the respective operational mode before the overcurrent event occurred.

According to a further preferred implementation form of the first aspect of the invention, the resonant hybrid flyback converter further comprises the above-mentioned comparator. In this context, a first input of the comparator is supplied with the corresponding voltage with respect to the resistance, preferably the shunt resistor, more preferably the shunt resistor providing a sensing voltage, most preferably the shunt resistor providing a sensing voltage in accordance with the corresponding primary-side current. In addition to this, a second input of the comparator is supplied with a reference voltage. Further additionally, an output of the comparator is especially used to trigger the entering of different modes of the resonant hybrid flyback converter. Advantageously, for example, the first input can be supplied by or connected to the above-mentioned sensing terminal, thereby reducing complexity, and thus increasing efficiency.

According to a further preferred implementation form of the first aspect of the invention, the resonant hybrid flyback converter further comprises supplying means being configured to be supplied by the secondary side and to supply the LED lighting means as a load. Additionally, the supplying means comprise a switch and/or a diode and/or a capacitance, preferably a capacitor. Further additionally, the capacitance, preferably the capacitor, is especially connected in parallel to the load. In further addition to this, the switch and/or the diode is especially connected in series to the load. Advantageously, for instance, an overcurrent protection not only of both switches of the half-bridge, but also of all components in the supplying means and of the load is achieved.

According to a second aspect of the invention, a system is provided. Said system comprises a resonant hybrid flyback converter according to the first aspect of the invention or any of its preferred implementation forms thereof, respectively, and LED lighting means being supplied by said resonant hybrid flyback converter. Advantageously, the half-bridge, the overall circuit and the load or the LED lighting means, respectively, are protected from possible damage in the case of an overcurrent event in a particularly efficient and reliable manner.

Exemplary embodiments of the invention are now further explained with respect to the drawings by way of example only, and not for limitation. In the drawings:
- Fig. 1: shows an exemplary embodiment of the first aspect of the invention in combination with the second aspect of the invention;
- Fig. 2: shows an exemplary embodiment of a comparator in the context of the invention; and
- Fig. 3: shows an exemplary time-voltage diagram with respect to an overcurrent event in the sense of the invention.

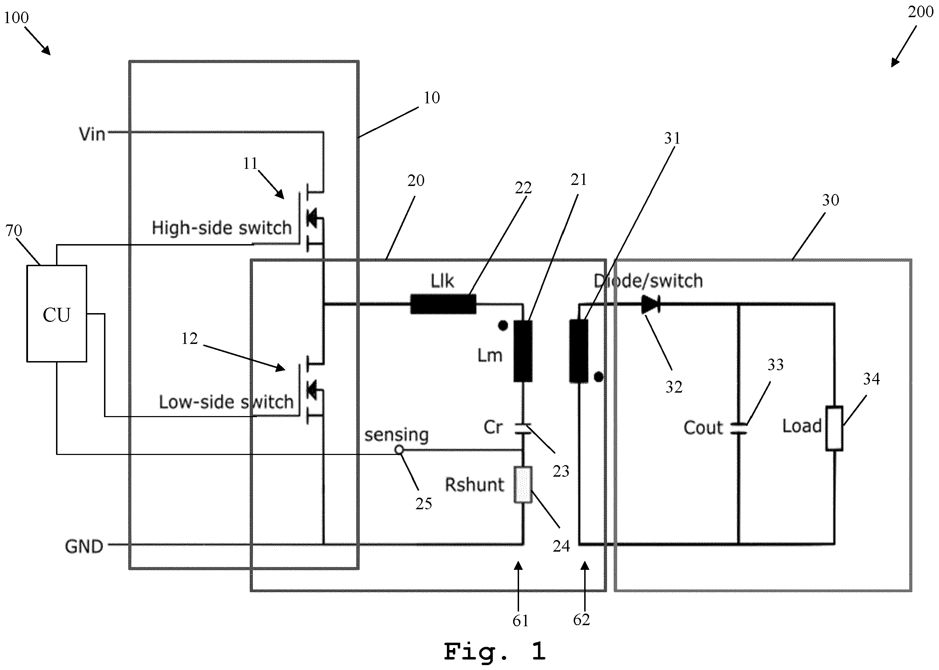

Firstly, Fig. 1 illustrates an exemplary embodiment of the inventive resonant hybrid flyback converter 100 with overcurrent detection and/or protection for LED lighting means 34.

In addition to this, it is noted that said Fig. 1 also depicts an exemplary embodiment of the inventive system 200 comprising the above-mentioned resonant hybrid flyback converter 100 and the above-mentioned LED lighting means 34, exemplarily illustrated as a load, being supplied by said resonant hybrid flyback converter 100.

As it can be seen from Fig. 1, the resonant hybrid flyback converter 100 comprises a half-bridge 10, and a flyback resonant tank 20 comprising a resonant capacitor 23 and a transformer with a primary side 61 and a secondary side 62.

In this context, the half-bridge 10 is configured to supply said primary side 61. Furthermore, the resonant hybrid flyback converter 100 is configured to sense a primary-side current in the flyback resonant tank 20.

In particular, with respect to said sensing especially in the context of overcurrent protection, the resonant hybrid flyback converter 100 comprises a control unit 70 controlling the operation of switches 11, 12 of the half-bridge 10 and being supplied with a feedback signal ("sensing" or reference sign 25, respectively) from a sensing circuit (Rₛₕᵤₙₜ or reference sign 24, respectively) configured to sense a primary-side current in the flyback resonant tank 20.

With respect to said control unit 70, it is noted that the control unit can also be a control and/or processing unit. In the following, the term "control and/or processing unit" will be used, wherein the corresponding features can analogously apply for the control unit 70. Nevertheless, it is also possible that such a control and/or processing unit is employed in addition to the control unit 70.

The above-mentioned half-bridge 10 comprises a high-side switch 11, exemplarily in the form of a first field-effect transistor, and a low-side switch 12, exemplarily in the form of a second field-effect transistor.

For the sake of completeness, with respect to said field-effect transistors 11 and 12, it is noted that said transistors are exemplarily of an n-channel enhancement type.

In this context, a first terminal, exemplarily a drain terminal, of the first field-effect transistor 11 is connected to a voltage potential, exemplarily a supply voltage, whereas a second terminal, exemplarily a source terminal, of the first field-effect transistor 11 is connected to a first terminal, exemplarily a drain terminal, of the second field-effect transistor 12. Furthermore, a second terminal, exemplarily a source terminal, of said second field-effect transistor 12 is connected to a voltage potential, especially another voltage potential, exemplarily ground.

Moreover, the above-mentioned primary side 61 comprises a series connection of a leakage inductance 22, which can be optional or omitted, respectively, a corresponding transformer main inductance 21 and a capacitance 23, exemplarily a resonance capacitor. In this context, the corresponding primary-side current especially flows through said series connection.

Furthermore, especially in the context of sensing the corresponding primary-side current, the flyback resonant tank 20, exemplarily the primary side 61, comprises a resistance, exemplarily a shunt resistor 24 providing a sensing voltage in accordance with the corresponding primary-side current.

In accordance with Fig. 1, the series connection further comprises said resistance or said shunt resistor 24 providing the sensing voltage in accordance with the corresponding primary-side current, respectively.

Moreover, the above-mentioned first terminal, exemplarily the drain terminal, of the second field-effect transistor 12 is connected to a first terminal of the leakage inductance 22, whereas a second terminal of said leakage inductance 22 is connected to a first terminal of the transformer main inductance 21. For the case that the leakage inductance 22 is omitted, it is noted that the first terminal of the second field-effect transistor 12 is connected to said first terminal of the transformer main inductance 21.

In addition to this, a second terminal of the transformer main inductance 21 is connected to a first terminal of the above-mentioned capacitance 23, whereas a second terminal of said capacitance 23 is connected to a first terminal of the shunt resistor 24, whereas a second terminal of said shunt resistor 24 providing the sensing voltage in accordance with the corresponding primary-side current is connected to a voltage potential, exemplarily ground.

In further addition to this, the first terminal of the shunt resistor 24 is connected to a sensing terminal 25.

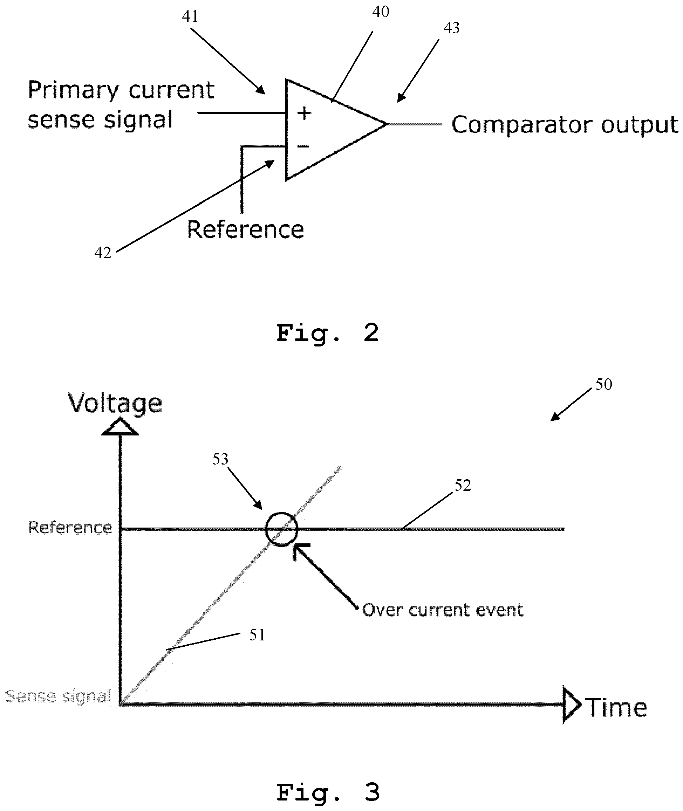

It is further noted that the resonant hybrid flyback converter 100 is further configured to compare the sensed corresponding primary-side current to a reference preferably with the aid of a comparator, such as comparator 40 of Fig. 2 described below, which can especially be comprised by the resonant hybrid flyback converter 100.

It might be particularly advantageous if on the basis of the comparison between the sensed corresponding primary-side current and the reference, preferably in the case that the sensed corresponding primary-side current exceeds the reference, the resonant hybrid flyback converter 100 is further configured to trigger the entering of a constant off-time mode, especially deactivation, of the half-bridge 10, preferably of the high-side switch 11 and/or the low-side switch 12, more preferably of the high-side switch 11 and/or the low-side switch 12 depending on the corresponding timing of the respective overcurrent event.

Additionally or alternatively, on the basis of the comparison between the sensed corresponding primary-side current and the reference, preferably in the case that the sensed corresponding primary-side current exceeds the reference, the resonant hybrid flyback converter 100 can further be configured to trigger the entering of a constant on-time mode of the half-bridge 10, preferably of the high-side switch 11 and/or the low-side switch 12.

In further addition to this or as a further alternative, on the basis of the comparison between the sensed corresponding primary-side current and the reference, preferably in the case that the sensed corresponding primary-side current exceeds the reference, the resonant hybrid flyback converter 100 can further be configured to trigger the entering of a burst mode with respect to the half-bridge 10, preferably a burst mode reducing the corresponding frequency of the respective drive signal of the high-side switch 11 and/or the low-side switch 12.

Further additionally or further alternatively, the resonant hybrid flyback converter 100 can further be configured to trigger the entering of an operational mode, exemplarily a regular operation mode, preferably after a defined time and/or responsive to a trigger signal.

In this context, the resonant hybrid flyback converter 100 may further comprise a control and/or processing unit being especially configured to generate said trigger signal. Said control and/or processing unit can also be configured to trigger the entering of at least one of the above-mentioned modes.

As it can further be seen from Fig. 1, the resonant hybrid flyback converter 100 further comprises supplying means 30 being configured to be supplied by the secondary side 62 and to supply the LED lighting means or the load 34, respectively.

In this context, the supplying means 30 comprise a switch and/or a diode, exemplarily a diode 32, and a capacitance, exemplarily an output capacitor 33.

Furthermore, the capacitance 33 is exemplarily connected in parallel to the load 34, whereas the diode 32 is exemplarily connected in series to the load 34.

In particular, a first terminal of a transformer secondary inductance 31 is connected to a first terminal, exemplarily an anode terminal, of the diode 32, whereas a second terminal, exemplarily a cathode terminal, of said diode 32 is connected to a first terminal of the capacitance 33 and to a first terminal of the load 34.

In addition this, a second terminal of the transformer secondary inductance 31 is connected to a second terminal of the capacitance 33 and to a second terminal of the load 34.

As mentioned above, it might be particularly advantageous if the resonant hybrid flyback converter 100 further comprises the comparator 40 according to Fig. 2.

In this context, as it can be seen from Fig. 2, a first input 41 of the comparator 40 is supplied with the corresponding voltage with respect to the above-mentioned resistance, exemplarily the shunt resistor 24 providing a sensing voltage in accordance with the corresponding primary-side current.

Accordingly, said first input 41 can exemplarily be connected with the above-mentioned sensing terminal 25.

Moreover, as it can further be seen from Fig. 2, a second input 42 of the comparator 40 is supplied with a reference or a reference voltage, respectively. Said reference or reference voltage, respectively, can exemplarily be provided by the above-mentioned control and/or processing unit.

Furthermore, an output 43 of the comparator 40 is exemplarily used to trigger the entering of different modes, such as at least one of the above-mentioned modes, of the resonant hybrid flyback converter 100. Said output 43 can exemplarily be connected to or provided for the above-mentioned control and/or processing unit.

With respect to said control and/or processing unit, it is further noted that it might be particularly advantageous if the control and/or processing unit is connected to a third terminal, exemplarily a gate terminal, of the first field-effect transistor 11 of Fig. 1 and/or a third terminal, exemplarily a gate terminal, of the second field-effect transistor 12.

Finally, Fig. 3 shows an exemplary time-voltage diagram 50 with respect to an overcurrent event 53 in the sense of the invention, especially in the context of the comparator 40 of Fig. 2.

In accordance with Fig. 3, the reference voltage, which is especially provided for the second input 42 of the comparator, is exemplarily depicted as a constant function 52.

Additionally, a sense voltage signal, exemplarily the corresponding voltage or voltage signal, respectively, with respect to the above-mentioned shunt resistor 24 providing a sensing voltage in accordance with the corresponding primary-side current, which is especially provided for the first input 41 of the comparator 40, is exemplarily illustrated as a linear function 51.

With respect to the above-mentioned overcurrent event 53 shown in Fig. 3, it is noted that said overcurrent event 53 is exemplarily equivalent to the point of intersection of the above-mentioned linear function 51 and constant function 52.

While various embodiments of the present invention have been described above, it should be understood that they have been presented by way of example only, and not limitation. Numerous changes to the disclosed embodiments can be made in accordance with the disclosure herein without departing from the spirit or scope of the invention. Thus, the breadth and scope of the present invention should not be limited by any of the above described embodiments. Rather, the scope of the invention should be defined in accordance with the following claims and their equivalents.

Although the invention has been illustrated and described with respect to one or more implementations, equivalent alterations and modifications will occur to others skilled in the art upon the reading and understanding of this specification and the annexed drawings. In addition, while a particular feature of the invention may have been disclosed with respect to only one of several implementations, such feature may be combined with one or more other features of the other implementations as may be desired and advantageous for any given or particular application.

## Claims

1. A resonant hybrid flyback converter (100) with overcurrent detection and/or protection for LED lighting means (34), the resonant hybrid flyback converter (100) comprising:
a half-bridge (10), and
a flyback resonant tank (20) comprising a transformer with a primary side (61) and a secondary side (62),
wherein the half-bridge (10) is configured to supply said primary side (61), and
wherein the resonant hybrid flyback converter (100) comprises a control unit (70) controlling the operation of switches (11, 12) of the half-bridge (10) and being supplied with a feedback signal (sensing) from a sensing circuit (Rₛₕᵤₙₜ) configured to sense a primary-side current in the flyback resonant tank (20).

2. The resonant hybrid flyback converter (100) according to claim 1,
wherein the switches of the half-bridge (10) comprise a high-side switch (11), preferably a first transistor, more preferably a first field-effect transistor, and a low-side switch (12), preferably a second transistor, more preferably a second field-effect transistor.

3. The resonant hybrid flyback converter (100) according to claim 1 or 2,
wherein the primary side (61) comprises a series connection of an optional inductance (22), preferably an optional leakage inductance, more preferably an optional resonance choke, most preferably a resonance choke implemented in the transformer or as a separate component, a corresponding transformer main inductance (21) and a capacitance (23), preferably a resonance capacitor,
wherein the primary-side current especially flows through said series connection.

4. The resonant hybrid flyback converter (100) according to any of the claims 1 to 3,
wherein especially in the context of sensing the primary-side current, the flyback resonant tank (20), especially the primary side (61), comprises a resistance (24), preferably a shunt resistor, more preferably a shunt resistor providing a sensing voltage, most preferably a shunt resistor providing a sensing voltage in accordance with the primary-side current.

5. The resonant hybrid flyback converter (100) according to claim 3 and 4,
wherein the series connection further comprises the resistance (24), preferably the shunt resistor, more preferably the shunt resistor providing the sensing voltage, most preferably the shunt resistor providing the sensing voltage in accordance with the primary-side current.

6. The resonant hybrid flyback converter (100) according to claim 5,
wherein a first terminal of the resistance (24), preferably the shunt resistor, more preferably the shunt resistor providing the sensing voltage, most preferably the shunt resistor providing the sensing voltage in accordance with the primary-side current, is connected to a terminal of the capacitance (23), preferably the resonance capacitor, and/or
wherein a second terminal of the resistance (24), preferably the shunt resistor, more preferably the shunt resistor providing the sensing voltage, most preferably the shunt resistor providing the sensing voltage in accordance with the primary-side current, is connected to a voltage potential, preferably ground.

7. The resonant hybrid flyback converter (100) according to claim 6,
wherein a first terminal of the resistance (24), preferably the shunt resistor, more preferably the shunt resistor providing the sensing voltage, most preferably the shunt resistor providing the sensing voltage in accordance with the primary-side current, is connected to a sensing terminal (25) .

8. The resonant hybrid flyback converter (100) according to any of the claims 1 to 7,
wherein the resonant hybrid flyback converter (100) is further configured to compare the sensed primary-side current to a reference preferably with the aid of a comparator (40) especially comprised by the resonant hybrid flyback converter (100).

9. The resonant hybrid flyback converter (100) according to claim 8,
wherein on the basis of the comparison between the sensed primary-side current and the reference, preferably in the case that the sensed primary-side current exceeds the reference, the resonant hybrid flyback converter (100) is further configured to trigger the entering of a constant off-time mode, especially deactivation, of the half-bridge (10), preferably of the high-side switch (11) and/or the low-side switch (12), more preferably of the high-side switch (11) and/or the low-side switch (12) depending on the corresponding timing of the respective overcurrent event.

10. The resonant hybrid flyback converter (100) according to claim 8 or 9,
wherein on the basis of the comparison between the sensed primary-side current and the reference, preferably in the case that the sensed primary-side current exceeds the reference, the resonant hybrid flyback converter (100) is further configured to trigger the entering of a constant on-time mode of the half-bridge (10), preferably of the high-side switch (11) and/or the low-side switch (12).

11. The resonant hybrid flyback converter (100) according to any of the claims 8 to 10,
wherein on the basis of the comparison between the sensed primary-side current and the reference, preferably in the case that the sensed primary-side current exceeds the reference, the resonant hybrid flyback converter (100) is further configured to trigger the entering of a burst mode with respect to the half-bridge (10), preferably a burst mode reducing the corresponding frequency of the respective drive signal of the high-side switch (11) and/or the low-side switch (12).

12. The resonant hybrid flyback converter (100) according to any of the claims 9 to 11,
wherein the resonant hybrid flyback converter (100) is further configured to trigger the entering of an operational mode preferably after a defined time and/or responsive to a trigger signal.

13. The resonant hybrid flyback converter (100) according to any of the claims 1 to 12,
wherein the resonant hybrid flyback converter (100) further comprises the comparator (40),
wherein a first input (41) of the comparator (40) is supplied with the corresponding voltage with respect to the resistance (24), preferably the shunt resistor, more preferably the shunt resistor providing a sensing voltage, most preferably the shunt resistor providing a sensing voltage in accordance with the primary-side current, and wherein a second input (42) of the comparator (40) is supplied with a reference voltage, and
wherein an output (43) of the comparator (40) is especially used to trigger the entering of different modes of the resonant hybrid flyback converter (100).

14. The resonant hybrid flyback converter (100) according to any of the claims 1 to 13,
wherein the resonant hybrid flyback converter (100) further comprises supplying means (30) being configured to be supplied by the secondary side (62) and to supply the LED lighting means (34) as a load,
wherein the supplying means (30) comprise a switch and/or a diode (32) and/or a capacitance (33), preferably a capacitor,
wherein the capacitance (33), preferably the capacitor, is especially connected in parallel to the load (34), and wherein the switch and/or the diode (32) is especially connected in series to the load (34).

15. A system (200) comprising:
a resonant hybrid flyback converter (100) according to any of the claims 1 to 14, and
LED lighting means (34) being supplied by said resonant hybrid flyback converter (100).

## Amended claims

### Amended claims in accordance with Rule 137(2) EPC.

1. A resonant hybrid flyback converter (100) with overcurrent detection and/or protection for LED lighting means (34), the resonant hybrid flyback converter (100) comprising:
a half-bridge (10), and
a flyback resonant tank (20) comprising a transformer with a primary side (61) and a secondary side (62), wherein the half-bridge (10) is configured to supply said primary side (61), and
wherein the resonant hybrid flyback converter (100) comprises a control unit (70) controlling the operation of switches (11, 12) of the half-bridge (10) and being supplied with a feedback signal (sensing) from a sensing circuit (Rₛₕᵤₙₜ) configured to sense a primary-side current in the flyback resonant tank (20),
**characterized in that**
the primary side current is flowing through a series connection of
- a transformer main inductance (21),
- a capacitance (23) and
- as sensing circuit, a shunt resistor (Rₛₙᵤₙₜ).

2. The resonant hybrid flyback converter (100) according to claim 1,
wherein the switches of the half-bridge (10) comprise a high-side switch (11), preferably a first transistor, more preferably a first field-effect transistor, and a low-side switch (12), preferably a second transistor, more preferably a second field-effect transistor.

3. The resonant hybrid flyback converter (100) according to claim 1 or 2,
wherein the series connection at the primary side (61) further comprises an inductance (22), preferably an optional leakage inductance, more and the capacitance (23) preferably is a resonance capacitor.

4. The resonant hybrid flyback converter (100) according to claim 1,
wherein a first terminal of the shunt resistor, is connected to a terminal of the capacitance (23), preferably the resonance capacitor, and/or
wherein a second terminal of the shunt resistor is connected to a voltage potential, preferably ground.

5. The resonant hybrid flyback converter (100) according to claim 4,
wherein a first terminal of the shunt resistor is connected to a sensing terminal (25).

6. The resonant hybrid flyback converter (100) according to any of the claims 1 to 5,
wherein the resonant hybrid flyback converter (100) is further configured to compare the sensed primary-side current to a reference preferably with the aid of a comparator (40) especially comprised by the resonant hybrid flyback converter (100).

7. The resonant hybrid flyback converter (100) according to claim 68wherein on the basis of the comparison between the sensed primary-side current and the reference, preferably in the case that the sensed primary-side current exceeds the reference, the resonant hybrid flyback converter (100) is further configured to trigger the entering of a constant off-time mode, especially deactivation, of the half-bridge (10), preferably of the high-side switch (11) and/or the low-side switch (12), more preferably of the high-side switch (11) and/or the low-side switch (12) depending on the corresponding timing of the respective overcurrent event.

8. The resonant hybrid flyback converter (100) according to claim 6 or 7,
wherein on the basis of the comparison between the sensed primary-side current and the reference, preferably in the case that the sensed primary-side current exceeds the reference, the resonant hybrid flyback converter (100) is further configured to trigger the entering of a constant on-time mode of the half-bridge (10), preferably of the high-side switch (11) and/or the low-side switch (12).

9. The resonant hybrid flyback converter (100) according to any of the claims 6 to 8,
wherein on the basis of the comparison between the sensed primary-side current and the reference, preferably in the case that the sensed primary-side current exceeds the reference, the resonant hybrid flyback converter (100) is further configured to trigger the entering of a burst mode with respect to the half-bridge (10), preferably a burst mode reducing the corresponding frequency of the respective drive signal of the high-side switch (11) and/or the low-side switch (12).

10. The resonant hybrid flyback converter (100) according to any of the claims 7 to 9,
wherein the resonant hybrid flyback converter (100) is further configured to trigger the entering of an operational mode preferably after a defined time and/or responsive to a trigger signal.

11. The resonant hybrid flyback converter (100) according to any of the claims 1 to 10,
wherein the resonant hybrid flyback converter (100) further comprises the comparator (40),
wherein a first input (41) of the comparator (40) is supplied with the corresponding voltage with respect to the resistance (24), preferably the shunt resistor, more preferably the shunt resistor providing a sensing voltage, most preferably the shunt resistor providing a sensing voltage in accordance with the primary-side current, and wherein a second input (42) of the comparator (40) is supplied with a reference voltage, and
wherein an output (43) of the comparator (40) is especially used to trigger the entering of different modes of the resonant hybrid flyback converter (100).

12. The resonant hybrid flyback converter (100) according to any of the claims 1 to 11,
wherein the resonant hybrid flyback converter (100) further comprises supplying means (30) being configured to be supplied by the secondary side (62) and to supply the LED lighting means (34) as a load,
wherein the supplying means (30) comprise a switch and/or a diode (32) and/or a capacitance (33), preferably a capacitor,
wherein the capacitance (33), preferably the capacitor, is especially connected in parallel to the load (34), and
wherein the switch and/or the diode (32) is especially connected in series to the load (34).

13. A system (200) comprising:
a resonant hybrid flyback converter (100) according to any of the claims 1 to 12, and
LED lighting means (34) being supplied by said resonant hybrid flyback converter (100).
